# EUROPEAN PATENT SPECIFICATION

(11) **EP 2 738 187 B1**
(45) Date of publication and mention of the grant of the patent: **04.05.2016**
(21) Application number: 12194911.9
(22) Date of filing: 29.11.2012
(51) Int. Cl.: C08F 210/16, C08F 4/80, C08F 210/02

(54) **PROCESS FOR THE MANUFACTURE OF VINYL CHLORIDE-CONTAINING COPOLYMERS**
VERFAHREN ZUR HERSTELLUNG VON VINYLCHLORIDHALTIGEN COPOLYMEREN
PROCÉDÉ POUR LA FABRICATION DE COPOLYMÈRES CONTENANT DU CHLORURE DE VINYLE

(43) Date of publication of application: 04.06.2014
(73) Proprietor: Solvay SA, 1120 Bruxelles (BE)
(72) Inventor: Mecking, Stefan, 78464 Konstanz (DE); Göttker-Schnetmann, Inigo, Johannes, 78462 Konstanz (DE); Leicht, Hannes, 78467 Konstanz (DE); Bodart, Vincent, 5001 NAMUR (BE); Hermant, Thomas, 1340 Ottignies (BE)
(74) Representative: Vande Gucht, Anne

(56) References cited:
- US-A1- 2006 270 811
- WENG, WEI ET AL: "Copolymerization of Ethylene and Vinyl Fluoride by (Phosphine-Sulfonate)Pd(Me)(py) Catalysts", JOURNAL OF THE AMERICAN CHEMICAL SOCIETY , 129(50), 15450-15451 CODEN: JACSAT; ISSN: 0002-7863, 2007, XP8161150,
- CARROW, BRAD P. ET AL: "Synthesis of Functional Polyolefins Using Cationic Bisphosphine Monoxide-Palladium Complexes", JOURNAL OF THE AMERICAN CHEMICAL SOCIETY , 134(21), 8802-8805 CODEN: JACSAT; ISSN: 0002-7863, 2012, XP8161126,

## Description

The present invention relates to a process for the manufacture of vinyl chloride-containing copolymers.

Metal-catalyzed coordination- insertion polymerization of olefins, like ethylene and propylene, is practiced on a large scale. However, coordination-insertion polymerization of polar vinyl monomers still remains a significant challenge in polymer synthesis (A. Nakamura et al., Chem. Rev., 2009, 109, 5215-5244).

With the development of late transition polymerization catalysts, significant progress in the copolymerization of polar vinyl monomers has been made, such that ethylene copolymers with acrylates, acrylonitrile, vinylacetate, vinylfluoride (like in Weng, Wei et al, Journal of the American Chemical Society, 2007, 129 (50), 15450-15451), allylic monomers, acrylic acid, acrylamides are now available by insertion polymerization. Even the homooligomerization of methyl acrylate has been reported.

Among the polar vinyl monomers, vinyl chloride (VC) is a particularly attractive monomer for coordination - insertion polymerization/copolymerization because polyvinyl chloride polymers (PVC) and VC copolymers are important commercial materials but coordination - insertion polymerization of VC has never been convincingly demonstrated till now neither with early-transition-metal catalysts nor with late transition polymerization catalysts.

Attempts made led to the conclusion that the polymerization is problematic due to the side reactions arising from the activated chlorine atom, particularly β-chloride elimination. The reason of this reactivity is not the reluctance of vinyl chloride to insert into a metal-carbon bond, but the high thermodynamic propensity for β-chloride elimination after net 1,2-vinyl chloride insertion to form olefin products and catalytically inactive metal-chloro complexes. While calculations using density functional theory (DFT) (Harold W. Boone, Phillip S. Athey, Michael J. Mullins, Dean Philipp, Richard Muller and William A. Goddard, J. Am. Chem. Soc., 2002, 124, 8790-8791 and Dean M. Philipp, Richard P. Muller, William A. Goddard, III, Joey Storer, Mark McAdon and Mike Mullins, J. Am. Chem. Soc., 2002, 124, 10198-10210) and experimental evidence point to an initial 2,1-insertion of vinyl chloride into the metal-carbon bond, the propensity of late transition polymerization catalysts for "chain walking" has been identified as source of the detrimental 1,2-net insertion of vinyl chloride in, e.g. α-diimine palladium catalysts (Stephen R. Foley, Robert A. Stockland, Jr., Han Shen and Richard F. Jordan, J. Am. Chem. Soc., 2003, 125, 4350-4361 and Stefan M. Kilyanek, Edward J. Stoebenau, III, Nawaporn Vinayavekhin and Richard F. Jordan, Organometallics; 2010, 29, 1750-1760). A similar reactivity towards vinyl chloride has been experimentally disclosed for bis(imino)pyridine- iron and cobalt complexes, for salicylaldiminato- and for phosphineenolato nickel complexes (Stephen R. Foley, Robert A. Stockland, Jr., Han Shen and Richard F. Jordan, J. Am. Chem. Soc., 2003, 125, 4350-4361).

Recently, cationic phosphine-phosphine oxide palladium catalysts have been reported to exhibit reduced ethylene polymerization activity in the presence of vinyl chloride (Brad P. Carrow and Kyoko Nozaki, J. Am. Chem. Soc., 2012, 134, 8802-8805). However, ethylene homopolymer without detectable chlorine content is formed by these catalysts.

Therefore, the incorporation of vinyl chloride was not reported so far and it remains a strong requirement for novel catalysts capable of polymerizing vinyl chloride.

The present invention aims to overcome the above-mentioned drawbacks by providing a process allowing the manufacture of vinyl chloride-containing copolymers by coordination - insertion copolymerization thanks to the use of particular catalysts.

Accordingly, the present invention relates to a process for the manufacture of vinyl chloride-containing copolymers by coordination - insertion polymerization of vinyl chloride with ethylene, characterized in the catalyst used for the polymerization is selected from the palladium catalysts responding to formula I 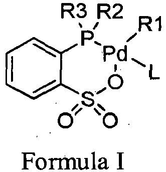 and the dimeric form of such palladium catalysts responding to formula II 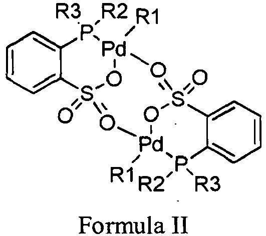 in which R1 is selected from hydrogen, methyl, neopentyl, benzyl and other carbyls which do not contain hydrogen in beta position to the metal, L is a weakly coordinated ligand and R2 and R3 are respectively either *tert*.-butyl and phenyl or both cyclohexyl.

The present invention relates to a process for the production of vinyl chloride-containing copolymers.

In the text of the present specification, the terms "polymers", "copolymers", "homopolymers" and "mixtures" are used indifferently in the singular as well as in the plural.

The expression "vinyl chloride-containing copolymers" is understood to mean, for the purposes of the present invention, copolymers containing at least one monomeric unit derived from vinyl chloride or a mixture of polymers at least part of them being copolymers containing at least one monomeric unit derived from vinyl chloride.

The process according to the invention is a process for the manufacture of vinyl chloride-containing copolymers by coordination - insertion polymerization of vinyl chloride with ethylene. The vinyl chloride-containing copolymers are therefore advantageously copolymers of vinyl chloride and ethylene.

The expression "copolymers of vinyl chloride and ethylene" is understood to mean, for the purposes of the present invention, copolymers containing at least one monomeric unit derived from vinyl chloride and monomeric units derived from ethylene or mixtures of polymers at least part of them being copolymers containing at least one monomeric unit derived from vinyl chloride and monomeric units derived from ethylene.

Preferably, the vinyl chloride-containing copolymers are a mixture of ethylene homopolymer (PE) and of copolymer containing at least one monomeric unit derived from vinyl chloride and monomeric units derived from ethylene (CPE). These preferred vinyl chloride-containing copolymers are characterized by a molar ratio of the number of chains of PE : the number of chains of CPE, determined by the ¹H NMR ratio of olefinic- vs CH₃C*H*Cl-groups in C₂D₂Cl₄ at 100 - 110°C, advantageously comprised between 1.5:1 to 10:1, preferably between 1.8:1 to 9.8:1.

The expression "coordination - insertion polymerization" is understood to mean, for the purposes of the present invention, an addition polymerization in which monomer adds to a growing macromolecule through an organometallic active center. This kind of polymerization is also often simply called insertion polymerization.

The catalyst used for the polymerization selected from the palladium catalysts responding to formula I and the dimeric form of such palladium catalysts responding to formula II as detailed here above are advantageously named palladium phosphane-sulfonate catalysts or phosphine-sulfonate catalysts.

R1 in formula I and formula II is selected from hydrogen, methyl, neopentyl, benzyl and other carbyls which do not contain hydrogen in beta position to the metal. Preferably, R1 is selected from hydrogen and methyl.

The expression "weakly coordinated ligand", is understood to mean, for the purposes of the present invention, a ligand that dissociates under polymerization conditions from the catalyst to form the active species which coordinates monomer prior to the chain growth step; "weakly coordinated" specifies that dissociation of the ligand and exchange for monomer is operated during polymerization because ligand is more weakly coordinated than monomer. The tendency of "weaker" is directly correlated to "less Lewis-basic".

Examples of weakly coordinated ligands are P(*tert*.-butyl)₃, pyridine, lutidine (2,6-dimethylpyridine), dimethyl sulfoxide (dmso), acetonitrile, dialkylformamides, phosphine-oxides or methanol.

Preferably, L is P(*tert*.-butyl)₃, pyridine, lutidine or dimethyl sulfoxide. More preferably, L is is P(*tert*.-butyl)₃, lutidine or dimethyl sulfoxide. Most preferably, L is P(*tert*.-butyl)₃ or dimethyl sulfoxide.

The catalyst used for the polymerization is therefore most preferably selected from the palladium catalysts responding to formula I and the dimeric form of such palladium catalysts responding to formula II as defined above in which L is P(*tert*.-butyl)₃ or dimethyl sulfoxide and R2 and R3 are respectively either tert.-butyl and phenyl or both cyclohexyl, and in which preferably R1 is selected from hydrogen and methyl.

According to a first variant of the process according to the present invention, the catalyst used for the polymerization is selected from the palladium catalysts responding to formula I and the dimeric form of such palladium catalysts responding to formula II as defined above in which L is P(tert.-butyl)3 or dimethyl sulfoxide and R2 and R3 are respectively tert.-butyl and phenyl, and in which preferably R1 is selected from hydrogen and methyl.

Catalysts according to this first variant are preferably
- (methyl) {(κ²-*P*,*O*)-2-[*tert*.-butyl(phenyl)phosphino] benzenesulfonato} (dimethylsufoxide) palladium(II) (2-dmso),
- (hydrido) {(κ²-*P*,*O*)-2-[*tert*.-butyl(phenyl)phosphino] benzenesulfonato} (tri-*tert*.-butylphosphine) palladium(II) (2-H-P(*t*Bu)₃), and
- µ-sulfonato-κ-*O*,κ-*O*'-bis{(methyl)-(κ²-*P*,*O*)-[2-(*tert*.-butyl(phenyl)phosphino) benzenesulfonato)] palladium(II)} ({2}₂), respectively represented by formulas III to V here below.

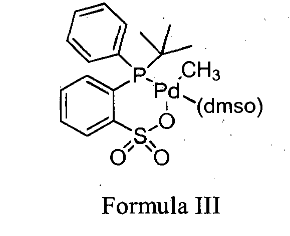

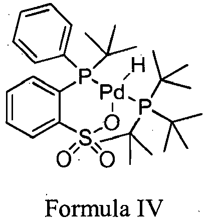

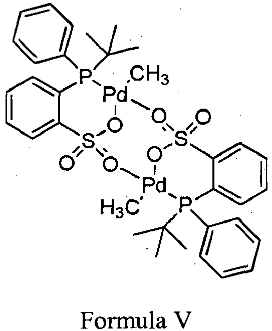

According to a second variant of the process according to the present invention, the catalyst used for the polymerization is selected from the palladium catalysts responding to formula I and the dimeric form of such palladium catalysts responding to formula II as defined above in which L is P(*tert*.-butyl)₃ or dimethyl sulfoxide and R2 and R3 are both cyclohexyl, and in which preferably R1 is selected from hydrogen and methyl.

Catalysts according to this second variant are preferably
- (methyl) {(κ2-*P*,*O*)-2-[dicyclohexylphosphino] benzenesulfonato} (dimethylsufoxide) palladium(II) (4-dmso),
- µ-sulfonato-κ-*O*,κ-*O*'-bis{(methyl)-[(*κ*2-*P,O*)-(2-(dicyclohexylphosphino) benzenesulfonato)] palladium(II)} ({4}2), and
- (hydrido) [(κ2-P,O)-2-(dicyclohexylphosphino) benzenesulfonato] (tri-*tert*.-butylphosphine) palladium(II) (4-H-P(tBu)3),
   respectively represented by formulas VI to VIII here below.

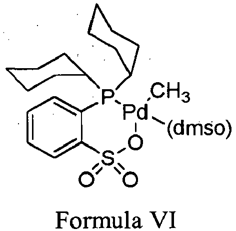

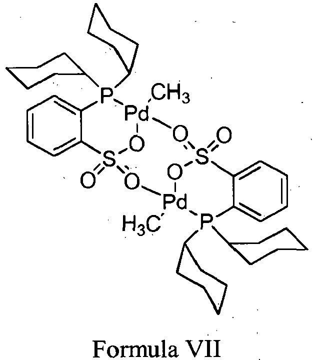

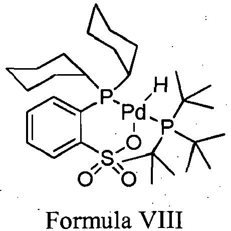

The polymerization takes place at a temperature advantageously of at least 30, preferably of at least 35, more preferably of at least 40, most preferably of at least 45°C.

The polymerization takes place at a temperature advantageously of at most 100, preferably of at most 95, more preferably of at most 90°C and most preferably of at most 85°C.

The polymerization takes place at a temperature advantageously comprised between 30 and 100°C. In most preferred case, the polymerization takes place at temperature comprised between 40 and 85°C.

The ratio of the number of moles of VC to the number of moles of catalyst (i.e, n_{VC}:n_{cat}) at the beginning of the polymerization is comprised advantageously between 100 and 5000, preferably between 100 and 2500, more preferably between 100 and 1700, most preferably between 135 and 1500.

The pressure of ethylene during polymerization is advantageously comprised between 1 and 5 bar (10⁵ Pa), preferably between 2 and 5 bar (10⁵ Pa), more preferably between 3 and 4 bar (10⁵ Pa). The pressure of ethylene can advantageously be kept constant between 30 minutes and 4 hours which corresponds advantageously to the duration of the polymerization during which the pressure of ethylene is kept constant.

None of the catalysts previously used for the copolymerization of vinyl chloride with ethylene by coordination - insertion polymerization allowed to obtain a vinyl chloride-containing copolymer. The process according to the invention represents therefore the first process allowing the manufacture of such copolymers by coordination - insertion polymerization.

The following examples are intended to illustrate the invention without however limiting the scope thereof.

### Catalysts

The catalysts used in the examples described below are
2-dmso i.e. (methyl) {(κ²-*P*,*O*)-2-[*tert*.-butyl(phenyl)phosphino] benzenesulfonato} (dimethylsufoxide) palladium(II),
{2}₂ i.e. µ-sulfonate-κ-*O*,κ-*O*'-bis{(methyl)-( *κ²-P*,*O*)-[2-(*tert*.-butyl(phenyl)phosphino) benzenesulfonato)] palladium(II)}
4-dmso i.e. (methyl) {(κ²-*P*,*O*)-2-[dicyclohexylphosphino] benzenesulfonato} (dimethylsufoxide) palladium(II)
2-H-P(*t*Bu)₃ i.e. (hydrido) {(κ²-*P*,*O*)-2-[*tert*.-butyl(phenyl)phosphino] benzenesulfonato} (tri-*tert*.-butylphosphine) palladium(II)
1-dmso i.e. (methyl) {(κ²-*P*,*O*)-2-[di-(2-anisyl)phosphino] benzenesulfonato} (dimethylsufoxide) palladium(II)
3-dmso i.e. (methyl) {(κ²-*P*,*O*)-2-[di-(*tert*.-butyl)phosphino] benzenesulfonato} (dimethylsufoxide) palladium(II)
1-nonylPyr i.e. (methyl) {(κ²-*P*,*O*)-2-[di-(2-anisyl)phosphino] benzenesulfonato} [4-(5-nonyl)pyridine] nickel(II)
whose synthesis is reported in Guironnet, D.; Rünzi, T.; Göttker-Schnetmann, I.; Mecking, S.; Chem. Commun. 2008, 4965-4967 except for 2-dmso the synthesis of which is described here after.

To a mixture of of 2-[tert-butyl(phenyl)phosphonium]benzenesulfonate (967.2 mg, 3.0 mmol) and of [Pd(Me)2(tmeda)] (759 mg, 3.0 mmol, 1 eq) (tmda = N,N,N',N'-tetramethylethylenediamine) was added acetone (30 mL) while stirring constantly until a clear solution formed (ca 10 min at 25°C) and methane evolution ceased. After stirring for 2 h, a white precipitate had formed which was identified as 2-tmeda_{0.5} by X-Ray diffraction analysis. The solvent was removed under vacuum, the residue extracted with toluene (2 x 10 mL), the remaining solid separated by centrifugation, washed with diethyl ether (3 x 25 mL), and dried under vacuum. The obtained white material was dissolved in dmso (60 mL) at 70°C, and the solvent was removed at 70°C under vacuum to leave a glassy solid, which was ultrasonicated with diethyl ether (50 mL) for 1 h to form a white microcrystalline powder of 2-dmso after centrifugation and drying under vacuum (1443 mg, 2.77 mmol, 92 %). 1H NMR (400 MHz, CD2C12, 25°C): δ = 8.20 (dd, 3JHH=8.5 Hz, 4JPH=4.0 Hz, 1H, H6), 7.56 (m, 3H, H4, H8 and H12), 7.35 (m, 4H, H5, H9, H10 and H11), 7.07 (vt, J=8.5 Hz, 1H, H3), 2.80 (s, 6H, dmso), 1.50 (d, J=15.9 Hz, 9H, C(CH3)3), 0.22 (d, 3JPH=1.0 Hz, 3H, Pd-Me). 13C NMR (101 MHz, CD2C12, 25°C): δ = 151.0 (Cq, d, 2JPC=12.1 Hz, C1), 137.0 (CH, d, 2JPC=1.0 Hz, C3), 133.7 (CH, d, 2JPC=9.6 Hz, C8 and C12), 132.1 (CH, d, 4JPC=2.2 Hz, C5), 132.0 (Cq, d, 1JPC=47.4 Hz, C7), 130.5 (CH, d, 4JPC=2.6 Hz, C10), 129.7 (CH, d, 3JPC=6.5 Hz, C4), 139.4 (CH, d, 3JPC=7.3 Hz, C6), 128.9 (CH, d, 3JPC=10.1 Hz, C9 and C11), 126.8 (Cq, d, 1JPC=41.3 Hz, C2), 41.1 (CH 3, s, dmso), 37.0 (Cq, d, 1JPC=25.4 Hz, C(CH 3)3), 29.4 (CH3, d, 2JPC=5.4 Hz, C(CH 3)3), 3.7 (CH3, s, Pd-Me). 31P NMR (162 MHz, CD2Cl2): δ = 46.8 (br). Anal. Calcd. (%) for C19H27O4PPdS2: C, 43.81; H, 5.22; S, 12.31. Found: C 44.05; H, 5.35; S, 12.25.

### Other materials

Vinyl chloride supplied by Linde or SOLVAY S.A.
Ethylene supplied by Westfalen-Gas, 3.5 quality
Dichloromethane p.a. (per analysis, dried by passage through Al₂O₃-columns, deoxygenized by passage through BASF R3-11 columns)
Toluene p.a. (per analysis, dried by passage through Al₂O₃-columns, deoxigenzied by passage through BASF R3-11 columns)

### General procedure for the polymerization

All polymerizations were performed in a Büchi Ecoclave reactor with a Cyclone 300 stirrer and a 200 mL gall vessel, equipped with a heating jacket. VC was condensed into the reactor at -22°C for a defined period of time. The exact amount of VC was determined by weighting the storage cylinder before and after the polymerization. 100 mL of toluene were added via cannula transfer. After adding a solution of the respective palladium phosphine-sulfonate catalyst in a small amount of dichloromethane, the toluene was saturated with 2 bar (10⁵ Pa) of ethylene for three minutes at -22 °C and stirring with 500 rpm, and the reactor was warmed to the polymerization temperature (the start of the polymerization could be observed by an emerging turbidity at about 30°C for 1-dmso, {2}₂ and 4-dmso, at about 40°C for 2-dmso and at about -5°C for 3-dmso) resulting in pressure comprised between 2.8 and 3.2 bar (10⁵ Pa) in the reactor. Optionally, the ethylene pressure was then increased to the desired value (indicated in table 1 below) in about 2 minutes. After two hours, the reactor was brought to room temperature. The ethylene/VC mixture was vented slowly and the reactor was purged with nitrogen with a cannula for at least 30 minutes. The reactor was evacuated several times carefully and the reaction mixture was transferred into a round-bottom flask. The solvent was removed in vacuo to yield the crude polymer which was suspended in methanol and then filtered off. Drying in vacuum at 50 °C yielded the polymer.

### Determination of the molecular weight by GPC

Number average molecular weight Mₙ, weight average molecular weight M_{w} and polydispersity (M_{w}/Mₙ) of copolymers were determined by Gel Permeation Chromatography (GPC) on a Polymer Laboratories 220 instrument equipped with Olexis columns. Samples were dissolved in 1, 2, 4-trichlorobenzene at 130°C and filtered before being injected in the apparatus.

A linear calibration based on narrow disperse polyethylene standards (at 130°C in 1, 2, 4-trichlorobenzene) was employed in order to calculate the molecular weight from times of elution measured by the instrument.

### Determination of the molecular weight and of VC incorporated by ¹H NMR

Number average molecular weight Mₙ was also determined by *¹H-NMR* on a VARIAN INOVA UNITY or on a BRUKER AVANCE III 600 instrument by integration of the olefinic *H*₂C=CH-R signals and R-C*H*=C*H*-R signals *vs* polyethylene backbone signals in C₂D₂Cl₄ at 100 - 110°C. The VC incorporated into the polymer chain (expressed in mol%) was determined by integration of the CH₃C*H*ClCH₂-R signal *vs* polyethylene backbone signals in C₂D₂Cl₄ at 100 - 110°C. Samples were prepared by dissolving ca 60-80 mg polymer in ca 0.4 ml C₂D₂Cl₄ in 5mm NMR tubes.

### Examples 1 to 10 (according to the invention) and 11(C) to 18(C) (comparative examples)

Examples 1 to 18(C) were performed according to the general procedure detailed above. All the conditions and results are summarized in table I below.

The difference between the number average molecular weight Mₙ obtained by *¹H-NMR* and the one obtained by GPC is based on the accuracy of the respective method. For relatively low molecular weight material (800-10.000 g/mol) *¹H-NMR* is more accurate than GPC due to error linked with retention time on a GPC column. Considering the errors of both methods, the obtained Mn's are in good agreement. The discrepancies therefore fall into an expected range.

Analysis by ¹H NMR spectroscopy revealed all the polymers to be linear.

n_{VC}:n_{cat} is the ratio of the number of moles of VC to the number of moles of catalyst.

TON is the turnover number i.e. the ratio of the number of moles of monomer in polymer to the number of moles of catalyst.

n[PE]:n[CPE] is the molar ratio of the number of chains of ethylene homopolymer (PE) : number of chains of copolymer containing at least one monomeric unit derived from vinyl chloride and monomeric units derived from ethylene (CPE) determined by the ¹H NMR ratio of olefinic-vs CH₃C*H*Cl-groups in C₂D₂Cl₄ at 100 - 110°C.

**Table 1**

| Example | Catalyst | T (°C) | Amount catalyst [µmol] | p(C₂H₄) [bar] [10⁵ Pa] | VC [mmol] | n_{VC}:n_{cat} | yield [mg] | TON C₂H₄ | VC-incorporated [mol%] | n[PE] : n[CPE] | Mₙ [g mol⁻¹] (¹H NMR) | Mₙ [g mol⁻¹] (GPC) | M_{w}/Mₙ (GPC) |
|---|---|---|---|---|---|---|---|---|---|---|---|---|---|
| 1 | 2-dmso | 50 | 47 | 4 | 19.2 | 409 | 268 | 203 | 0.05 | 2.4:1 | 14000 | 8000 | 1.8 |
| 2 | 2-dmso | 70 | 45 | 4 | 28.8 | 640 | 282 | 223 | 0.06 | 5.2:1 | 7100 | 5500 | n.d. |
| 3 | 2-dmso | 70 | 47 | 3 | 41.6 | 885 | 151 | 115 | 0.10 | 3.6:1 | 6100 | 3000 | n.d. |
| 4 | 2-dmso | 70 | 47 | 4 | 41.6 | 885 | 215 | 163 | 0.08 | 3.2:1 | 8100 | n.d. | n.d. |
| 5 | 2-dmso | 70 | 47 | 4 | 51.2 | 1089 | 127 | 96 | 0.11 | 5.0:1 | 4500 | 2600 | 2.2 |
| 6 | 2-H-P(*t*Bu)₃ | 85 | 19 | 3.2 | 27.2 | 1432 | 15 | 28 | 0.40 | 1.8:1 | 3900 | n.d. | n.d. |
| 7 | {2}₂ | 40 | 45 | 4 | 6.4 | 142 | 177 | 140 | 0.03 | 9.8:1 | 8400 | 4000 | 1.6 |
| 8 | {2}₂ | 70 | 45 | 4 | 24 | 533 | 179 | 142 | 0.07 | 4.6:1 | 8000 | 4400 | 2.6 |
| 9 | {2}₂ | 80 | 42 | 4 | 30.4 | 724 | 100 | 85 | 0.08 | 3.3:1 | 8000 | 4200 | 2.4 |
| 10 | 4-dmso | 60 | 45 | 4 | 36.8 | 818 | 298 | 236 | 0.05 | 3.4:1 | 13000 | 6000 | 2.5 |
| 11(C) | - | 70 | 0 | 4 | 57.6 | - | - | - | - | - | - | - | - |
| 12(C) | {2}₂ | 40 | 45 | - | 8 | 178 | - | - | - | - | - | - | - |
| 13(C) | 2-dmso | 40 | 45 | - | 8 | 178 | - | - | - | - | - | - | - |
| 14(C) | 1-dmso | 60 | 8 | 3 | - | - | 550 | 2451 | - | - | 19000 | 15000 | 3.6 |
| 15(C) | 1-dmso | 70 | 50 | 3.6 | 84.8 | 1696 | 54 | 39 | - | - | 2700 | 1600 | 1.8 |
| 16(C) | 1-dmso | 80 | 50 | 4 | 35.2 | 704 | 123 | 88 | - | - | 4700 | 2600 | 1.8 |
| 17(C) | 3-dmso | 30 | 45 | 4 | 44.8 | 996 | 315 | 250 | - | - | 5900 | 6600 | n.d. |
| 18(C) | 5-nonylPyr | 50 | 40 | 4 | 28.8 | 720 | - | - | - | - | - | - | - |

| | | | | | | | | | | | | | |
|---|---|---|---|---|---|---|---|---|---|---|---|---|---|
| n.d.: non determined | | | | | | | | | | | | | |

## Claims

1. Process for the manufacture of vinyl chloride-containing copolymers by coordination - insertion polymerization of vinyl chloride with ethylene, **characterized in that** the catalyst used for the polymerization is selected from the palladium catalysts responding to formula I 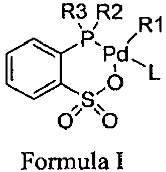 and the dimeric form of such palladium catalysts responding to formula II 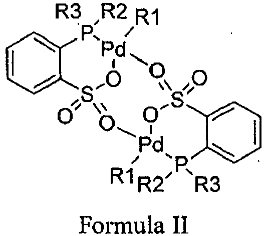 in which R1 is selected from hydrogen, methyl, neopentyl, benzyl and other carbyls which do not contain hydrogen in beta position to the metal, L is a weakly coordinated ligand and R2 and R3 are respectively either *tert*.-butyl and phenyl or both cyclohexyl.

2. Process according to Claim 1, **characterized in that** R1 is selected from hydrogen and methyl.

3. Process according to either Claim 1 or 2, **characterized in that** L is P(*tert*.-butyl)₃ or dimethyl sulfoxide.

4. Process according to Claim 3, **characterized in that** R2 and R3 are respectively *tert*.-butyl and phenyl.

5. Process according to Claim 3, **characterized in that** R2 and R3 are both cyclohexyl.

6. Process according to any one of Claims 1 to 5, wherein the polymerization takes place at a temperature comprised between 30 and 100°C.

7. Process according to any one of Claims 1 to 6, wherein the polymerization takes place at a temperature comprised between 40 and 85°C.

8. Process according to any one of Claims 1 to 7, wherein the ratio of the number of moles of vinyl chloride to the number of moles of catalyst at the beginning of the polymerization is comprised between 100 and 5000.

9. Process according to any one of Claims 1 to 8, wherein the ratio of the number of moles of vinyl chloride to the number of moles of catalyst at the beginning of the polymerization is comprised between 100 and 1700.

10. Process according to any one of Claims 1 to 9, wherein the pressure of ethylene during polymerization is comprised between 1 and 5 bar (10⁵ Pa).

11. Process according to any one of Claims 1 to 10, wherein the pressure of ethylene during polymerization is comprised between 3 and 4 bar (10⁵ Pa).

12. Process according to any one of Claims 1 to 11, according to which the vinyl chloride-containing copolymers are copolymers of vinyl chloride and ethylene.

13. Process according to any one of Claims 1 to 12, according to which the vinyl chloride-containing copolymers are a mixture of ethylene homopolymer and of copolymer containing at least one monomeric unit derived from vinyl chloride and monomeric units derived from ethylene.

## Patentansprüche

1. Verfahren zur Herstellung von Vinylchlorid enthaltenden Copolymeren durch Koordinations-Insertions-Polymerisation von Vinylchlorid mit Ethylen, **dadurch gekennzeichnet, dass** der für die Polymerisation verwendete Katalysator aus den Palladiumkatalysatoren der Formel I 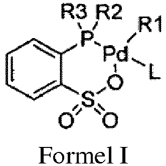 und der dimeren Form derartiger Palladiumkatalysatoren der Formel II 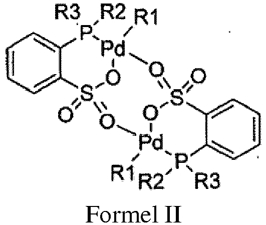 wobei R1 aus Wasserstoff, Methyl, Neopentyl, Benzyl und anderen Carbylgruppen, die keinen Wasserstoff in beta-Position zum Metall enthalten, ausgewählt ist, L für einen schwach koordinierten Liganden steht und R2 und R3 entweder für *tert*.-Butyl bzw. Phenyl oder beide für Cyclohexyl stehen, ausgewählt wird.

2. Verfahren nach Anspruch 1, **dadurch gekennzeichnet, dass** R1 aus Wasserstoff und Methyl ausgewählt ist.

3. Verfahren nach Anspruch 1 oder 2, **dadurch gekennzeichnet, dass** L für P(*tert*.-Butyl)₃ oder Dimethylsulfoxid steht.

4. Verfahren nach Anspruch 3, **dadurch gekennzeichnet, dass** R2 und R3 für *tert*.-Butyl bzw. Phenyl stehen.

5. Verfahren nach Anspruch 3, **dadurch gekennzeichnet, dass** R2 und R3 beide für Cyclohexyl stehen.

6. Verfahren nach einem der Ansprüche 1 bis 5, bei dem die Polymerisation bei einer Temperatur zwischen 30 und 100°C erfolgt.

7. Verfahren nach einem der Ansprüche 1 bis 6, bei dem die Polymerisation bei einer Temperatur zwischen 40 und 85°C erfolgt.

8. Verfahren nach einem der Ansprüche 1 bis 7, bei dem das Verhältnis der Zahl der Mole Vinylchlorid zur Zahl der Mole Katalysator zu Beginn der Polymerisation zwischen 100 und 5000 liegt.

9. Verfahren nach einem der Ansprüche 1 bis 8, bei dem das Verhältnis der Zahl der Mole Vinylchlorid zur Zahl der Mole Katalysator zu Beginn der Polymerisation zwischen 100 und 1700 liegt.

10. Verfahren nach einem der Ansprüche 1 bis 9, bei dem der Ethylendruck während der Polymerisation zwischen 1 und 5 bar (10⁵ Pa) liegt.

11. Verfahren nach einem der Ansprüche 1 bis 10, bei dem der Ethylendruck während der Polymerisation zwischen 3 und 4 bar (10⁵ Pa) liegt.

12. Verfahren nach einem der Ansprüche 1 bis 11, gemäß dem es sich bei den Vinylchlorid enthaltenden Copolymeren um Copolymere von Vinylchlorid und Ethylen handelt.

13. Verfahren nach einem der Ansprüche 1 bis 12, gemäß dem es sich bei den Vinylchlorid enthaltenden Copolymeren um ein Gemisch von Ethylen-Homopolymer und mindestens eine von Vinylchlorid abgeleitete Monomereinheit und von Ethylen abgeleitete Monomereinheiten enthaltendem Copolymer handelt.

## Revendications

1. Procédé de fabrication de copolymères contenant du chlorure de vinyle par polymérisation par coordination-insertion de chlorure de vinyle avec de l'éthylène, **caractérisé en ce que** le catalyseur utilisé pour la polymérisation est choisi parmi les catalyseurs au palladium répondant à la formule I 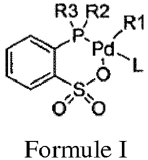 et la forme dimérique de ces catalyseurs au palladium répondant à la formule II 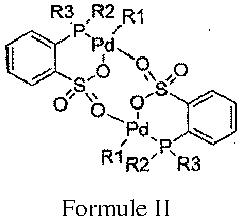 où R1 est choisi parmi un hydrogène, un méthyle, un néopentyle, un benzyle et les autres carbyles qui ne contiennent pas d'hydrogène à la position bêta par rapport au métal, L est un ligand faiblement coordiné et R2 et R3 représentent respectivement un *tert*-butyle et un phényle ou tous les deux un cyclohexyle.

2. Procédé selon la revendication 1, **caractérisé en ce que** R1 est choisi entre un hydrogène et un méthyle.

3. Procédé selon la revendication 1 ou 2, **caractérisé en ce que** L est un groupe P(*tert*-butyle)₃ ou le diméthylsulfoxyde.

4. Procédé selon la revendication 3, **caractérisé en ce que** R2 et R3 représentent respectivement un *tert*-butyle et un phényle.

5. Procédé selon la revendication 3, **caractérisé en ce que** R2 et R3 représentent tous les deux un cyclohexyle.

6. Procédé selon l'une quelconque des revendications 1 à 5, dans lequel la polymérisation a lieu à une température comprise entre 30 et 100 C.

7. Procédé selon l'une quelconque des revendications 1 à 6, dans lequel la polymérisation a lieu à une température comprise entre 40 et 85 C.

8. Procédé selon l'une quelconque des revendications 1 à 7, dans lequel le rapport entre le nombre de moles de chlorure de vinyle et le nombre de moles de catalyseur au début de la polymérisation est compris entre 100 et 5000.

9. Procédé selon l'une quelconque des revendications 1 à 8, dans lequel le rapport entre le nombre de moles de chlorure de vinyle et le nombre de moles de catalyseur au début de la polymérisation est compris entre 100 et 1700.

10. Procédé selon l'une quelconque des revendications 1 à 9, dans lequel la pression d'éthylène pendant la polymérisation est comprise entre 1 et 5 bar (10⁵ Pa).

11. Procédé selon l'une quelconque des revendications 1 à 10, dans lequel la pression d'éthylène pendant la polymérisation est comprise entre 3 et 4 bar (10⁵ Pa).

12. Procédé selon l'une quelconque des revendications 1 à 11, selon lequel les copolymères contenant du chlorure de vinyle sont des copolymères de chlorure de vinyle et d'éthylène.

13. Procédé selon l'une quelconque des revendications 1 à 12, selon lequel les copolymères contenant du chlorure de vinyle sont un mélange d'homopolymère d'éthylène et de copolymère contenant au moins un motif monomère dérivé du chlorure de vinyle et des motifs monomères dérivés de l'éthylène.
